# EUROPÄISCHE PATENTSCHRIFT

(11) **EP 0 784 830 B1**
(45) Veröffentlichungstag und Bekanntmachung des Hinweises auf die Patenterteilung: **26.08.1998**
(21) Anmeldenummer: 95932628.1
(22) Anmeldetag: 27.09.1995
(51) Int. Cl.: G06K 19/077

(54) **DATENTRÄGERANORDNUNG**
DATA CARRIER ARRANGEMENT
AGENCEMENT DE SUPPORT DE DONNEES

(30) Priorität: 30.09.1994 DE 4435122
(43) Veröffentlichungstag der Anmeldung: 23.07.1997
(73) Patentinhaber: SIEMENS AKTIENGESELLSCHAFT, 80333 München (DE)
(72) Erfinder: HAFNER, Karlheinz, D-81739 München (DE); MEHRGARDT, Sönke, D-79232 March (DE)
(86) Internationale Anmeldenummer: DE9501339
(87) Internationale Veröffentlichungsnummer: WO9610804

(56) Entgegenhaltungen:
- EP-A- 0 231 090
- EP-A- 0 349 726
- EP-A- 0 379 592
- EP-A- 0 546 680
- US-A- 5 289 339

## Beschreibung

Die Erfindung betrifft eine Datenträgerkarte.

Die Erfindung betrifft außerdem eine Anordnung aus mindestens zwei Datenträgerkarten und ein Verfahren zum Zugriff auf mindestens eine Datenträgerkarte der Anordnung.

Solche Datenträgerkarten sind allgemein als Chipkarte bekannt. Eine Chipkarte hat standardisierte Abmessungen und enthält mindestens einen in einer Aussparung oder Vertiefung der Karte angeordneten Halbleiterschaltkreis. Die Chipkarte weist eine Anzahl von Anschlüssen auf, die oberflächengleich zu einer Hauptfläche der Karte innerhalb dieser Oberfläche und vom Kartenrand entfernt liegen. Zur Kontaktierung dieser Anschlüsse in einem Lesegerät sind entsprechend aufwendige mechanische Vorrichtungen notwendig. Die Kontaktaufnahme kann auf rein mechanischem Wege oder unter Ausnutzung von elektromechanischen Effekten hergestellt werden.

Darüber hinaus sind Datenträgerkarten für Datenverarbeitungseinrichtungen, insbesondere Personal Computer, bekannt. Diese beispielsweise als PCMCIA-Standard genormten Datenträger enthalten einen oder mehrere Halbleiterschaltkreise, auf die vom Personal Computer zugegriffen wird. Eine solche PCMCIA-Karte weist an einer ihrer Kantenseiten eine Anschlußleiste auf, die steckbare Kontakte enthält. Die Anschlußleiste wird in ein entsprechendes Anschlußgegenstück im Personal Computer eingesteckt.

Die herkömmlichen Datenträgerkarten sind zur Speicherung größerer Datenmengen nur bedingt geeignet. Wenn ein Verarbeitungsgerät auf mehrere PCMCIA-Karten zugreifen soll, muß entweder ein Kartenwechsel durchgeführt werden oder aber muß, sofern mehrere Karten gleichzeitig eingesteckt bleiben, für jede Karte eine entsprechende Anschlußbuchse im Verarbeitungsgerät vorhanden sein. Diese Anschlußeinrichtungen benötigen relativ viel Volumen. Dies steht dem Bestreben nach ständiger Verkleinerung elektronischer Geräte entgegen. Darüber hinaus sind Steckverbindungen wegen ihrer mechanischen Komplexität aufwendig herzustellen und relativ teuer.

Aus der EP-A2 0 231 090 ist eine IC-Karte bekannt, die eine von isolierendem Kunststoff umgebene flexible Leiterplatte aufweist, die eine Vielzahl von Elektrodenanschlüssen an wenigstens einer Seite der Karte aufweist.

In der US-A 5,289,339 ist eine Speicherkarte mit symmetrischer Anschlußbelegung beschrieben. Es ist dadurch ein Anschließend der Karte an einen Verbinder auch möglich, wenn die Karte umgedreht eingeschoben wird.

Die EP-A2 0 349 726 beschreibt eine IC-Karte mit einem Energiesparbetriebszustand.

In der EP-A1 0 379 592 ist eine IC-Speicherkarte beschrieben, bei der viele Speicherchips auf einer Leiterplatte gestapelt sind. Die Speicherchips sind dabei durch separate Anschlußleitungen miteinander verbunden.

Die Aufgabe der Erfindung besteht darin, eine Datenträgerkarte der eingangs genannten Art anzugeben, die derart ausgeführt ist, daß sie gleichzeitig mit einer Vielzahl weiterer gleichartiger Datenträgerkarten ohne aufwendige zusätzliche Hilfsmittel an ein Verarbeitungsgerät angeschlossen werden kann.

Eine andere Aufgabe besteht darin, eine Anordnung aus mindestens zwei derartigen Datenträgerkarten anzugeben. Darüber hinaus besteht eine Aufgabe darin, ein Verfahren zum Zugriff auf mindestens eine Karte der Anordnung anzugeben.

Erfindungsgemäß wird die Aufgabe betreffend die Datenträgerkarte durch die Merkmale des Patentanspruchs 1 gelöst.

Die anderen Aufgaben werden durch die Merkmale der Patentansprüche 5 bzw. 9 gelöst.

Da die Anschlußflächen der erfindungsgemäßen Datenträgerkarte an einer Kante der Karte angeordnet sind, können mehrere solchen Karten problemlos aufeinandergelegt werden. Die Kontaktierung der Anschlüsse untereinander kann dann über eine Kontaktschiene in einer entsprechenden Anschlußbuchse hergestellt werden. Diese Buchse kann beispielsweise in einem-Zugriffsgerät angeordnet sein. Es ist auch denkbar, daß die Anschlußbuchse lose gehandhabt wird und die Datenträgerkarte in einem mechanisch festem Verbund halt. Das Gegenstück kann Teil eines Gehäuses sein, daß in bezug auf seine Außenabmessungen standardgemäßen Abmessungen eines genormten Geräteeinschubs (z. B. einer PCMCIA-Karte) entspricht.

Wenn gemäß einer Ausführungsform die Anschlußflächen im Bereich der Kante auch auf die beiden Hauptflächen der Karte ausgedehnt sind, kommt die Kontaktierung mehrerer übereinander gelegter Karten ohne weitere Hilfsmittel zustande. Vorzugsweise sind die in die beiden Hauptflächen der Karte ragenden Anschlußflächenabschnitte in ihrer Größe deckungsgleich.

Zweckmäßigerweise ist die Funktionsbelegung der Anschlüsse in bezug auf die Mitte der die Anschußflächen aufweisenden Kantenfläche symmetrisch. Somit kann die Datenträgerkarte ohne weiteres seitenvertauscht verwendet werden. Außerdem liegt eine erhöhte Funktionssicherheit vor, da die Funktionsmerkmale eines Anschlusses zweifach vorhanden sind.

In einer anderen Ausführung ist vorgesehen, daß die die Anschlüsse aufweisende Kantenfläche der Datenträgerkarte und der Kartenaufnehmer eine ineinandergreifende jeweils gegenüberliegende Flächenkontur aufweisen. Dadurch wird erreicht, daß die Karte nur an der die Anschlüsse aufweisenden Kantenflache in den Kartenaufnehmer unter Bildung des elektrischen Kontakts einsteckbar ist. Wenn die Flächenkontur außerdem zu einer mittleren Kartenachse nicht symmetrisch ist, wird gewährleistet, daß die Karte bezüglich dieser Symmetrieachse nicht seitenvertauscht eingesteckt werden kann. Nur dann, wenn die Flächenkonturen von Kartenaufnehmer und Datenträgerkarte gegenseitig ineinandergreifen und sich komplementär ergänzen, ist der elektrische Kontakt herstellbar. Die ineinandergreifenden Flächenkonturen können beispielsweise in einer abgeschrägten Ecke der Karte und einer entsprechend ausgefüllten Ecke des Aufnehmers bestehen und/oder in einer nicht kartenmittig angeordneten Aussparung der Karte zur Aufnahme eines entsprechenden Vorsprungs des Kartenaufnehmers.

Die untereinander verbundenen entsprechenden Anschlüsse mehrerer übereinanderliegender Karten wirken logisch als Datenbus. Der Zugriff auf die Karten wird von einer mit den Anschlüssen verbundenen Steuerungseinrichtung im Verarbeitungsgerät überwacht. Dabei kann wahlweise auf jede der Karten einzeln oder gemeinsam zugegriffen werden. Um eine Karte gezielt vom Verarbeitungsgerät ansprechen zu können, enthält die Karte in einem ihrer Halbleiterschaltkreise einen nicht-flüchtigen Speicher mit einem Identifikationskennzeichen. Das Identifikationskennzeichen kann beispielsweise ein nur für diese Karte vergebenes Zeichen sein. Es kann als binärer Wert gespeichert werden, der einer Anzahl von Zahlen und anderen Zeichen entspricht. Diese können z. B. eine Kartennummer und einen alphanumerischen Text umfassen. Mit einer entsprechenden Codierung beispielsweise in Form einer oder mehrere Prüfziffern kann eine Zugriffssicherheit erreicht werden.

Die Steuerungseinrichtung im Verarbeitungsgerät kann in regelmäßigen zeitlichen Abständen das Identifikationskennzeichen der Karte abfragen und somit einen Identifikationszyklus aller Karten durchführen. Beim Einfügen einer weiteren Karte in den Kartenaufnehmer im Verarbeitungsgerät bzw. das Aufnahmegehäuse kann beispielsweise durch Schließen oder Öffnen eines elektrischen Kontakts oder durch Unterbrechen einer Lichtschranke ein Identifikationszyklus für den Bus ausgelöst werden. Darüber hinaus sind alle weiteren für Busse üblichen Zugriffsvorgänge möglich. Möglich ist beispielsweise auch ein Datentransfer zwischen mehreren Karten direkt untereinander ohne Beteiligung der geräteinternen Steuerungseinrichtung möglich.

Auf jeder Datenträgerkarte ist vorzugsweise eine Einrichtung vorgesehen, durch die Schaltungsteile der Datenträgerkarte von der Energieversorgung abgeschaltet werden. Dadurch wird der Stromverbrauch verringert. Die Einrichtung ist derart ausgeführt, daß eine Ruhephase erkannt wird, so daß daraufhin ein oder mehrere Halbleiterschaltkreise deaktiviert werden. Die Überwachungseinrichtung bleibt vorerst aktiv. Beim Empfang der der Karte zugeordneten Identifikationsnummer wird diese von der Einrichtung erkannt, so daß daraufhin die vorher abgeschalteten Halbleiterschaltkreise wieder mit Strom versorgt werden. Ein externes Ansprechen der Datenträgerkarte ist dann unverzüglich möglich.

In einer Weiterbildung der Überwachungseinrichtung ist vorgesehen, daß diese nach Ablauf einer bestimmten von ihr überwachten Zeitspanne des Ruhezustands sich selbst und noch sonstige mit Strom versorgte Schaltungsteile der Karte abschaltet. Die Überwachungseinrichtung weist deshalb auch weitere Schaltungsmittel auf, mit denen ein Zugriff auf den Bus überhaupt festgestellt wird. Daraufhin sorgen diese Mittel dafür, daß zumindest die Überwachungseinrichtung der Karte wieder eingeschaltet wird. Daraufhin kann ein empfangenes Identifikationskennzeichen ausgewertet werden, so daß nur beim Feststellen der Übereinstimmung mit dem Identifikationsmerkmal der jeweiligen Karte die restlichen auf der Karte angeordneten Schaltungsteile wieder eingeschaltet werden.

Wie bereits oben ausgeführt, ist es vorteilhaft, mehrere übereinander liegende Datenträgerkarten in einem Anschlußstück oder in einem Gehäuse zusammenzufassen. Die Außenanschlüsse des Anschlußstücks zur weiteren Verbindung zum Verarbeitungsgerät können durchaus normgerechten Anschlüssen, z. B. einer PCMCIA-Karte, entsprechen. Außerdem ist es vorteilhaft, wenn das Gehäuse in seinen Außenabmessungen normgerechten Abmessungen für gewöhnliche Geräteeinschübe entspricht, z. B. denen einer PCMCIA-Karte. Um die Chipkarten möglichst exakt übereinander anordnen zu können und damit an deren Anschlüssen ein exaktes Überlappen zu gewährleisten, so daß dort auch ein exakter elektrischer Kontakt sichergestellt ist, sind auf der Datenträgerkarte Positionierungsmittel vorgesehen. Zweckmäßigerweise umfassen diese Positionierungsmittel mindestens einen Vorsprung auf der Hauptfläche der Karte, vorzugsweise in deren Randbereich. Auf der gegenüberliegenden Hauptfläche weist die Karte eine entsprechende Vertiefung auf, in die der jeweilige Vorsprung einer anderen Karte aufgenommen wird. Somit ist ein rutschfestes exaktes Übereinanderliegen der Karten gewährleistet. Im Zusammenhang mit einem eine Vielzahl von Datenträgerkarten aufnehmendem Gehäuse können am Rand der Karte und an der ihr gegenüberliegenden Gehäusewand sich jeweils entsprechende Positionierungsmittel vorgesehen werden. Dies können Vorsprünge bzw. Vertiefungen oder Nuten auf einer Kante der Chipkarte und Vertiefungen oder Nuten bzw. Vorsprünge an der gegenüberliegenden Gehäusewand sein.

Bei einer Verbindung von einer Vielzahl von Datenträgerkarten zu einem Datenbus liegt für gewöhnlich eine hohe kapazitive Last an den auf den Datenbus zugreifenden Ausgangstreiberstufen vor. In der schaltungstechnischen Realisierung können diese Ausgangstreiber in herkömmlicher Weise realisiert werden, z. B. als Open-Kollektor-Stufen. Zur Verringerung der kapazitiven Belastung ist es vorteilhaft, die Vielzahl der miteinander zum Datenbus verbundenen Datenträgerkarten in Gruppensegmente aufzuteilen. Ein Segment umfaßt mehrere, beispielsweise 16 oder 32 unmittelbar nebeneinander angeordnete Karten, deren Anschlüsse von den Anschlüssen der Karten eines weiteren Segments durch eine Puffereinrichtung getrennt sind. Dadurch wird eine Lastentkopplung zwischen den einzelnen Segmenten erreicht. Demzufolge wirkt auf die Ausgangstreiber in einem Segment nur die kapazitive Last der Anschlüsse dieses Segments. Logisch gesehen wirken alle miteinander verbundenen Segmente insgesamt als ein einziger Bus.

Nachfolgend wird nun der Aufbau einer erfindungsgemäßen Datenträgerkarte in der Zeichnung näher erläutert. Es zeigen:
Figur 1 eine perspektivische Aufsicht auf die Datenträgerkarte und
Figur 2 eine Schnittdarstellung in Längsrichtung der Karte.

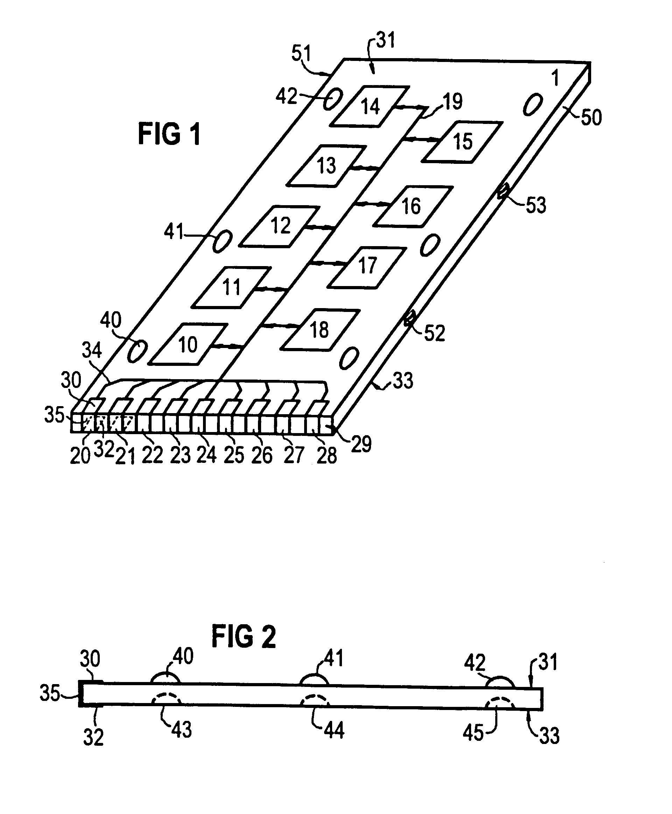

Die Datenträgerkarte 1 enthält ein Substrat, das vorzugsweise aus einem elektrisch isolierenden Kunststoffmaterial besteht. Auf der Datenträgerkarte 1 sind eine Vielzahl von integrierten Halbleiterschaltungen 10...18 angeordnet. Die äußere Oberfläche der Halbleiterschaltkreise bildet mit der Hauptfläche der Karte 1 eine gemeinsame im wesentlichen ebene Oberfläche. Hierzu können gemäß für Chipkarten üblichen Verfahren die Halbleiterschaltkreise in entsprechende Aussparungen der Karte 1, beispielsweise nach einer an sich bekannten Kapselung, eingebracht werden. Die Halbleiterschaltungen sind untereinander über Datenleitungen 19 miteinander verbunden. Diese sind in der Figur 1 nur schematisch dargestellt. Zur elektrischen Kontaktierung der Karte sind Anschlüsse 20...28 vorgesehen. Die Anschlüsse liegen an einer Kante der Karte. Sie bestehen aus leitfähigem Metall. Jeder der Anschlüsse weist drei miteinander verbundene Anschlußflächen auf, nämlich einen Anschlußbereich 35, der auf der Kantenfläche 29 liegt, einen Anschlußbereich 30, der auf der Oberfläche der Hauptfläche 31 liegt, und einen Anschlußbereich 32, der auf der Oberfläche der der Hauptfläche 31 gegenüberliegenden Hauptfläche 33 liegt. Die Flächenabschnitte 35, 30, 32 sind jeweils rechteckig ausgebildet und weisen mit der Fläche 35 jeweils eine gemeinsame Rechteckkante auf. Jeder der Anschlüsse 20...28 ist an eine Leitung 34 angeschlossen und wird über die schematisch dargestellten Leitungen 19 mit einem oder mehreren Halbleiterschaltkreisen verbunden. Die Anschlußflächen 35, 30, 32 der Anschlüsse 20...28 können flächengleich mit der Oberfläche der Karte 1 abschließen. Sie können auch auf der Oberfläche der Karte 1 erhaben aufliegen, wie in der Schnittdarstellung der Figur 2 gezeigt ist. Die Halbleiterschaltkreise 10...17 sind in der dargestellten Ausführungsform Speicherschaltkreise, in denen Daten nicht-flüchtig gespeichert werden. Diese Daten können beispielsweise digitalisierte Musiksignale, von einer elektronischen Kamera aufgenommene Bildsignale, Texte (wie z. B. gesamte Lexika), elektronische Landkarten, Software für Datenverarbeitungsanlagen, usw. sein. Die Halbleiterspeicher können beschreibbare und löschbare Speicher oder nur Nur-Lese-Speicher (ROM) sein. Vorzugsweise sind die Daten in bezug auf ihre Redundanz komprimiert gespeichert.

Der Halbleiterschaltkreis 18 führt Steuerungsfunktionen aus. Sofern die Daten komprimiert gespeichert sind, wird vom Schaltkreis 18 die Dekomprimierung beim Auslesen und gegebenenfalls die Komprimierung beim Einlesen durchgeführt. Die Steuerungseinrichtung 18 ist zweckmäßigerweise ein Mikroprozessor. Sie enthält darüber hinaus den Speicher für das Identifikationskennzeichen. Außerdem enthält die Steuerungseinrichtung 18 die Überwachungseinrichtung für das Strommanagement. Diese Einrichtung sorgt dafür, daß nach einer vorbestimmten Zeit einer Ruhepause die Speicherschaltkreise 10...17 von der Stromversorgung getrennt werden. Sie enthält darüber hinaus eine Zeitzähleinrichtung, mit der nach Vorliegen dieser stromsparenden Betriebsart auch die Steuerungseinrichtung 18 abgeschaltet wird. Bei Eintreffen eines beliebigen Signals wird - wie oben beschrieben - durch die Überwachungseinrichtung die Einrichtung 18 wieder aktiviert. Nach Feststellung des der Karte zugeordneten Identifikationsmerkmals werden wiederum die übrigen Speicherschaltkreise 10...17 an die Stromversorgung angeschaltet.

Die Karte 1 weist halbkreisförmige Vorsprünge 40, 41, 42 am Längsrand einer Hauptfläche auf. Gegenüberliegend zu den Vorsprüngen 40, 41, 42 sind in die Hauptfläche 33 Vertiefungen 43, 44, 45 eingebracht, in die die Vorsprünge einer anderen Datenträgerkarte eingreifen können. Dadurch ist ein verrutschfestes und lagerichtiges Positionieren der weiteren Karte unter die Daten-Trägerkarte 1 möglich, so daß an der Kontaktfläche 32 der Anschlüsse 20...28 auf einfache Weise ein elektrischer Kontakt mit den Anschlüssen der weiteren Karten hergestellt wird. Außerdem weist die Karte an den Kantenflächen 50, 51 Vorsprünge 52, 53 auf. Wenn die Datenträgerkarte in ein dafür vorgesehenes Gehäuse eingeschoben wird, können die Vorsprünge 52, 53 in dort entsprechende Nuten eingreifen, so daß die Datenträgerkarte im Gehäuse sicher gehalten wird.

## Patentansprüche

1. Datenträgerkarte (1) mit zwei im wesentlichen parallelen Hauptflächen,
- mit mindestens einem in einer Aussparung der Karte (1) angeordneten Halbleiterschaltkreis (10...18),
- mit mindestens einem mit dem Halbleiterschaltkreis (10...18) verbundenen Außenanschluß (20...28) zum elektrischen Kontaktieren des Halbleiterschaltkreises (10...18),
- der Außenanschluß (20) weist eine Anschlußfläche (35) auf, die auf einer der Kantenflächen (29) der Karte (1) angeordnet ist,
- der Außenanschluß (20) weist mindestens zwei weitere Anschlußflächen (30, 32) auf, die mit der Anschlußfläche (35) elektrisch verbunden sind,
- je eine der weiteren Anschlußflächen liegt derart auf einer der zwei Hauptflächen (31, 33) der Karte (1), daß bei deckungsgleichem Übereinanderlegen zweier gleichartiger Karten (1) die Anschlußflächen (30) der einen Datenträgerkarte mit den Anschlußflächen (32) der anderen Datenträgerkarte in Kontakt kommen.

2. Datenträgerkarte nach Anspruch 1,
**dadurch gekennzeichnet**, daß
der oder ein weiterer Halbleiterschaltkreis (18) eine Einrichtung enthält, durch die während einer Ruhephase Schaltungsteile auf dem und/oder dem weiteren Halbleiterschaltkreis (18) in bezug auf die Energieversorgung abgeschaltet werden und nach einem Zugriff auf die Datenträgerkarte wieder eingeschaltet werden.

3. Datenträgerkarte nach einem der Ansprüche 1 oder 2,
**dadurch gekennzeichnet**, daß
sie auf einer Hauptfläche (31) mindestens einen Vorsprung (40...42) und auf der gegenüberliegenden Hauptfläche (32) eine entsprechende Vertiefung (43...45) aufweist, in die der Vorsprung einer weiteren Datenträgerkarte aufgenommen werden kann.

4. Datenträgerkarte nach einem der Ansprüche 1 bis 3,
**dadurch gekennzeichnet**, daß
sie mindestens auf einer derjenigen Kantenflächen (50, 51), die unmittelbar an die die Anschlußfläche aufweisende Kantenfläche (29) anschließen, mindestens einen Vorsprung (52, 53) oder eine Nut aufweist, der bzw. die zum verrutschfesten Zusammenwirken mit einem entsprechenden an einem Gehäuse, in das die Datenträgerkarte einsteckbar ist, angeordneten Gegenstück für diesen Vorsprung bzw. diese Nut vorgesehen ist.

5. Anordnung aus mindestens zwei Datenträgerkarten nach einem der Ansprüche 1 bis 4,
**dadurch gekennzeichnet**, daß
die mindestens zwei Karten in bezug auf ihre Kantenflächen deckungsgleich übereinander liegend angeordnet sind und über ihre jeweiligen Anschlußflächen miteinander elektrisch verbunden sind.

6. Anordnung nach Anspruch 5,
**dadurch gekennzeichnet**, daß
die Anordnung aus einer Vielzahl von Karten gebildet ist, daß die Vielzahl in mindestens zwei Gruppen aufgeteilt ist und daß die miteinander verbundenen Anschlußflächen einer der Gruppen mit den miteinander verbundenen Anschlußflächen einer anderen der Gruppen über Kopplungsmittel zur elektrischen Lastentkopplung verbunden sind.

7. Anordnung nach Anspruch 4 oder 5,
**dadurch gekennzeichnet**, daß
die Anordnung von einer Halterung umgeben ist, in der die Karten kraftschlüssig gehalten sind, und daß die Halterung in ihren Außenabmessungen mit standardgemäßen Abmessungen für Einschübe in Verarbeitungsgeräten, die auf die Karten zugreifen können, übereinstimmt.

8. Anordnung nach Anspruch 7,
**dadurch gekennzeichnet**, daß
die Halterung einen Verbinder aufweist, der den für den Einschub vorgesehenen standardgemäßen elektrischen Größen und räumlichen Abmessungen entspricht, und daß die für die elektrische Verbindung vorgesehenen Elemente des Verbinders an die verbundenen Anschlußflächen der Karten angeschlossen sind.

9. Verfahren zum Zugriff auf mindestens eine der Datenträgerkarten in einer Anordnung nach einem der Ansprüche 5 bis 8,
**dadurch gekennzeichnet**, daß
von einem Verarbeitungsgerät ein einer Karte zugeordnetes Identifikationskennzeichen gesandt wird, welches von den miteinander elektrisch verbundenen Karten empfangen wird, daß das empfangene Identifikationskennzeichen in der Karte mit dem dort gespeicherten Identifikationskennzeichen verglichen wird, daß bei einer Übereinstimmung Empfangsmittel im Halbleiterschaltkreis auf der Karte für einen Zugriff vorbereitet werden.

10. Verfahren nach Anspruch 9,
**dadurch gekennzeichnet**, daß
beim Entfernen oder Einstecken einer Karte aus bzw. in das Gerät von der Karte das Identifikationskennzeichen an das Gerät gesandt wird.

## Claims

1. Data carrier card (1) having two essentially parallel main surface areas,
- having at least one semiconductor circuit (10...18) arranged in a recess of the card (1),
- having at least one external terminal (20...28), connected to the semiconductor circuit (10...18), for establishing the electrical contact of the semiconductor circuit (10...18),
- the external terminal (20) has a terminal face (35), which is arranged on one of the edge faces (29) of the card (1),
- the external terminal (20) has at least two further terminal faces (30, 32), which are electrically connected to the terminal face (35),
- one of the further terminal faces lies respectively on one of the two main surface areas (31, 33) of the card (1), such that, when two identical cards (1) lie congruently one on the other, the terminal faces (30) of the one data carrier card come into contact with the terminal faces (32) of the other data carrier card.

2. Data carrier card according to Claim 1, characterized in that the or a further semiconductor circuit (18) contains a device by which, during a rest phase, circuit parts on the and/or on the further semiconductor circuit (18) are switched off with respect to the energy supply and are switched on again after access to the data carrier card.

3. Data carrier card according to either of Claims 1 and 2, characterized in that it has on one main surface area (31) at least one projection (40...42) and on the opposite main surface area (32) a corresponding depression (43...45), in which the projection of a further data carrier card can be received.

4. Data carrier card according to one of Claims 1 to 3, characterized in that it has, at least on those edge faces (50, 51) which directly adjoin the edge face (29) having the terminal face, at least one projection (52, 53) or a groove, which is provided for slip-preventing interaction with a corresponding counterpiece for this projection or this groove, respectively, arranged on a housing into which the data carrier card can be inserted.

5. Arrangement comprising at least two data carrier cards according to one of Claims 1 to 4, characterized in that the at least two cards are arranged lying one on top of the other congruently with respect to their edge faces and are electrically interconnected via their respective terminal faces.

6. Arrangement according to Claim 5, characterized in that the arrangement is formed by a multiplicity of cards, in that the multiplicity is divided into at least two groups and in that the interconnected terminal faces of one of the groups are connected to the interconnected terminal faces of another of the groups via coupling means for electrical load isolation.

7. Arrangement according to Claim 4 or 5, characterized in that the arrangement is surrounded by a fixture in which the cards are held by force closure, and in that the fixture coincides in its outside dimensions with standard dimensions for inserts in processing units which can access the cards.

8. Arrangement according to Claim 7, characterized in that the fixture has a connector which corresponds to the standard electrical parameters and spatial dimensions provided for insertion, and in that the elements of the connector which are intended for the electrical connection are connected to the connected terminal faces of the cards.

9. Method of accessing at least one of the data carrier cards in an arrangement according to one of Claims 5 to 8, characterized in that an identification tag assigned to a card is sent by a processing unit, which tag is received by the electrically interconnected cards, in that the received identification tag is compared in the card with the identification tag stored there and in that, if there is a match, receiving means in the semiconductor circuit on the card are prepared for access.

10. Method according to Claim 9, characterized in that when a card is removed from or inserted into the unit, the identification tag is sent from the card to the unit.

## Revendications

1. Carte (1) de support de données, ayant deux surfaces principales sensiblement parallèles et comprenant
- au moins un circuit (10...18) à semi-conducteurs disposé dans un évidement de la carte (1),
- au moins une borne (20...28) extérieure reliée au circuit (10...18) à semi-conducteurs pour établir le contact électrique du circuit (10...18) à semi-conducteurs,
- la borne (20) extérieure comportant une surface (35) de raccordement, qui se trouve sur l'une des surfaces (29) de bord de la carte (1),
- la borne (20) extérieure comportant au moins deux autres surfaces (30, 32) de raccordement, qui sont reliées électriquement à la surface (35) de raccordement,
- chacune des autres surfaces de raccordement reposant sur l'une des deux surfaces (31, 33) principales de la carte (1), de sorte que, lorsque deux cartes (1) de même type sont superposées en coïncidence, les surfaces (30) de raccordement de l'une des cartes de support de données viennent en contact avec les surfaces (32) de raccordement de l'autre carte de support de données.

2. Carte de support de données suivant la revendication 1,
caractérisée en ce que
le circuit (18) à semi-conducteurs ou un autre circuit (18) à semi-conducteurs comporte un dispositif par lequel, pendant une phase de repos, des parties du circuit à semi-conducteurs ou de l'autre circuit à semi-conducteurs peuvent être débranchées par rapport à la source d'alimentation et être rebranchées après un accès à la carte de support de données.

3. Carte de support de données suivant la revendication 1 ou 2,
caractérisée en ce qu'elle comporte sur une surface (31) principale au moins une saillie (40...42) et sur la surface (32) principale opposée une cavité (43...45) correspondante dans laquelle peut être reçue la saillie d'une autre carte de support de données.

4. Carte de support de données suivant l'une des revendications 1 à 3,
caractérisée en ce qu'elle comporte, au moins sur l'une des surfaces (50, 51) de bord qui se raccordent directement à la surface (29) de bord comportant la surface de raccordement, au moins une saillie (52, 53) ou une gorge qui est destinée à coopérer, sans possibilité de glisser, avec une pièce antagoniste de cette saillie ou de cette gorge prévue de manière correspondante sur un boîtier dans lequel la carte de support de données peut être insérée.

5. Dispositif constitué d'au moins deux cartes de support de données suivant l'une des revendications 1 à 4,
caractérisé en ce que
les au moins deux cartes sont superposées avec coïncidence de leur surface de bord et sont reliées électriquement entre elles par leur surface de raccordement.

6. Dispositif suivant la revendication 5,
caractérisé
en ce que le dispositif est constitué d'une pluralité de cartes, en ce que la pluralité est subdivisée en au moins deux groupes et en ce que les surfaces de raccordement reliées entre elles de l'un des groupes sont reliées aux surfaces de raccordement reliées entre elles d'un autre des groupes par des moyens d'accouplement pour le découplage électrique de charge.

7. Dispositif suivant la revendication 4 ou 5,
caractérisé
en ce que le dispositif est entouré d'une pièce de fixation dans laquelle les cartes sont maintenues positivement et en ce que les dimensions extérieures de la pièce de fixation correspondent à des dimensions normalisées en vue d'une insertion dans des appareils de traitement qui peuvent accéder aux cartes.

8. Dispositif suivant la revendication 7,
caractérisé
en ce que la pièce de fixation comporte un connecteur qui correspond aux grandeurs électriques normalisées et aux dimensions dans l'espace prévues pour l'insertion et en ce que les éléments du connecteur prévus pour la liaison électrique sont raccordés aux surfaces de raccordement des cartes qui sont reliées.

9. Procédé d'accès à au moins l'une des cartes de support de données dans un dispositif suivant l'une des revendications 5 à 8,
caractérisé
en ce qu'il consiste à envoyer par un appareil de traitement une caractéristique d'identification qui est associée à une carte et qui est reçue par les cartes reliées électriquement entre elles, à comparer la caractéristique d'identification qui est reçue dans la carte à la caractéristique d'identification qui y est mémorisée et, en cas de coïncidence, à préparer pour un accès un moyen de réception du circuit à semi-conducteurs de la carte.

10. Procédé suivant la revendication 9,
caractérisé en ce qu'il consiste à faire envoyer par la carte, lorsqu'on l'enlève de l'appareil ou lorsqu'on l'y insère, la caractéristique d'identification à l'appareil.
